# EUROPÄISCHE PATENTSCHRIFT

(11) **EP 3 434 983 B1**
(45) Veröffentlichungstag und Bekanntmachung des Hinweises auf die Patenterteilung: **14.08.2019**
(21) Anmeldenummer: 18185000.9
(22) Anmeldetag: 23.07.2018
(51) Int. Cl.: F24D 10/00, F24D 19/10, F28F 27/00, F28G 15/00

(54) **VERFAHREN ZUR DIAGNOSE EINES WÄRMETAUSCHERS**
METHOD FOR DIAGNOSING A HEAT EXCHANGER
PROCÉDÉ DE DIAGNOSTIC D'UN ECHANGEUR THERMIQUE

(30) Priorität: 25.07.2017 DE 102017116834
(43) Veröffentlichungstag der Anmeldung: 30.01.2019
(73) Patentinhaber: Samson AG, 60314 Frankfurt (DE)
(72) Erfinder: Schwan, Rainer, 60437 Frankfurt (DE)
(74) Vertreter: Puschmann Borchert Bardehle Patentanwälte Partnerschaft mbB

(56) Entgegenhaltungen:
- EP-A1- 2 908 059
- WO-A1-02/090832
- WO-A1-2004/065885
- WO-A1-2013/034358

## Beschreibung

Die Erfindung betrifft ein Verfahren zur Diagnose des Verschmutzungsgrades eines Wärmetauschers, bei dem der primärseitige Massestrom des Strömungsmittels durch den Wärmetauscher durch ein Stellventil eingestellt wird, welches von einem Prozessregler geregelt wird, wobei die von dem Prozessregler gelieferten Ventilstellungswerte für das Stellventil erfasst und gespeichert werden. Insbesondere betrifft die Erfindung ein Verfahren zur Diagnose nach dem Oberbegriff des ersten Anspruchs, wie in WO 2013/034358A1 offenbart.

Die DE 10 2014 202 478 A1 offenbart ein Verfahren und eine Anlage zur Diagnose einer Heizanlage mit mindestens einem Wärmetauscher, bei dem eine Meldung ausgegeben und/oder gespeichert wird, wenn eine Erwärmung des Strömungsmittels um eine bestimmte Temperatur länger als eine vorbestimmte Zeit benötigt und/oder wenn die Erwärmung eines bestimmten Massestroms des Strömungsmittels durch den Wärmetauscher unterhalb einer vorbestimmten Temperaturdifferenz bleibt. Es wird dazu die Temperaturdifferenz zwischen Vorlauftemperatur und Rücklauftemperatur des Wärmetauschers und die Leistung einer Pumpe in einem Teilheizkreis gemessen. Wird eine höhere Leistung der Pumpe bei gleichbleibender oder gar sinkender Temperaturdifferenz benötigt, wird eine Warnmeldung gegeben, die auf eine verminderte Funktionsfähigkeit hinweist. Bei diesem bekannten Verfahren wird lediglich das Überschreiten eines Schwellenwerts als Auslöser für eine Warnmeldung genutzt, wobei die Warnmeldung erst dann gegeben wird, wenn die Verstopfung des Wärmetauschers eingetreten ist.

Bei der DE 103 02 156 A1 wird zur Diagnose von Verstopfungen in Kanälen eines Mikrowärmeübertragers außen an dem Mikrowärmeübertrager mindestens ein Temperatursensor angeordnet und daran eine Auswerteeinrichtung angeschlossen, die aufgrund von Änderungen der gemessenen Temperatur bei unveränderten Eintrittsparametern der am Wärmeaustausch beteiligten Strömungsmittel eine Verstopfung diagnostiziert. Insbesondere ist an dem Temperatursensor eine Regeleinrichtung angeschlossen, die den Massestrom eines der am Wärmeaustausch beteiligten Strömungsmittel so regelt, dass die gemessene Temperatur konstant gehalten wird, wobei aufgrund von Änderungen des Massestroms eine Verstopfung diagnostiziert wird. Auch bei diesem Verfahren wird nur das Überschreiten eines Schwellenwerts als Auslöser für eine Warnmeldung genutzt.

Bei längerer Benutzung von Wärmetauschern kommt es durch Verschmutzungen und Ablagerungen von Kalk oder dergleichen zu Verstopfungen in den Wärmetauscherkanälen und dadurch zu einer unerwünschten Verringerung der Wärmeübertragungsleistung.

Der Erfindung liegt die Aufgabe zugrunde, ein Verfahren zur Diagnose des Verschmutzungsgrades eines Wärmetauschers bereitzustellen, welches eine zuverlässige Früherkennung einer Verstopfung des Wärmetauschers ermöglicht.

In bekannter Weise betrifft das Verfahren zur Diagnose des Verschmutzungsgrades eines Wärmetauschers zum Wärmeaustausch zwischen einem Netzkreis und einem Verbraucherkreis, bei dem der Massestrom des Strömungsmittels durch den Netzkreis des Wärmetauschers durch ein Stellventil eingestellt wird, welches von einem Prozessregler geregelt wird, wobei die von dem Prozessregler gelieferten Ventilstellungswerte für das Stellventil erfasst und gespeichert werden.

Der Netzkreis kann bevorzugt ein Fernwärme- oder Fernkältekreislauf sein, wobei der Verbraucherkreislauf bevorzugt zur Warmwasseraufbereitung und/oder ein Heiz- oder Kühlkreislauf ist.

Zu diesem Zweck ist das erfindungsgemäße Verfahren dadurch gekennzeichnet, dass die Ventilstellungswerte für das Stellventil über einen Aufzeichnungszeitraum derart aufgezeichnet werden, dass in wenigstens einer Messreihe, Ventilstellungswerte die einem periodischen Betrachtungszeitraum zugeordnet sind, gespeichert werden, wobei der Betrachtungszeitraum gleiche Teile eines Jahres abbildet. Durch die Auswertung der Ventilstellungswerte der wenigstens einen Messreihe über den Aufzeichnungszeitraum, kann ein Verschmutzungsgrad des Wärmetauschers diagnostiziert werden, wenn die Abweichung eines gespeicherten Messwerts zu einem der Messreihe zugeordnetem Referenzwert größer als eine vordefinierte Abweichung vom Referenzwert ist.

Die vordefinierte Abweichung kann als Abweichung relativ zu einem Referenzwert bezogen auf die Messwerte einer Messreihe oder als Absolutwert ausgehend von einem festen Referenzwert in Form eines Schwellwerts definiert sein. Ein Schwellwert kann beispielsweise 80% des maximalen Ventilstellungswerts sein.

Indem der Betrachtungszeitraum so gewählt wird, dass er zeitgleiche Teile eines Jahres abbildet, werden umweltbedingte Einflüsse auf die Ventilstellungswerte weitgehend eliminiert, da davon ausgegangen werden kann, dass die Umweltverhältnisse im Betrachtungszeitraum näherungsweise gleich sind. Der Betrachtungszeitraum wird bevorzugt mit jährlicher Periode ausgewertet.

Durch die Wahl des Betrachtungszeitraus kann erreicht werden, dass eine Änderung der Ventilstellungswerte nicht der Änderung der Umwelteinflüsse, sondern der Übertragungsleistung des Wärmetauschers zuzuschreiben ist.

Auf diese Weise kann durch die langfristige Änderung der Ventilstellungswerte im Betrachtungszeitraum auf eine abnehmende Übertragerleistung und analog auf den Verschmutzungsgrad des Wärmetauschers geschlossen werden.

Das Stellventil ist bevorzugt in einen Regelkreislauf eingebunden, der den Massestrom abhängig von der Vorlauftemperatur und/oder der Rücklauftemperatur des Netzkreises und abhängig von der Vorlauftemperatur und/oder Rücklauftemperatur des Verbraucherkreises einstellt.

Bei dem erfindungsgemäßen Verfahren kann der Stellungsregler des Stellventils für die Diagnose genutzt werden, sodass keine weiteren Kosten für zusätzliche Sensorik oder andere Messverfahren entstehen.

Vorteilhafterweise können die Ventilstellungswerte über einen Betrachtungszeitraum gemittelt werden. So können insbesondere dann, wenn der Betrachtungszeitraum einem Kalendermonat entspricht Schwankungen ausgeglichen werden, indem dann nur ein repräsentativer Mittelwert einem Kalendermonat zugeordnet wird. Auch kann der Betrachtungszeitraum Kalenderwochen entsprechen, welchen dann Wochenmittelwerte zugeordnet werden.

Da nur Mittelwerte langfristig dokumentiert werden, erfolgt dies mit einem vergleichsweise geringen Speicheraufwand für die Speicherung der Stellwerte.

Eine Auswertung kann sich beispielsweise darauf beziehen, dass die Ventilstellungswertentwicklung einer Messreihe über die Perioden betrachtet wird. So kann beispielsweise ein außerhalb der Abweichung liegender Messwert ignoriert werden, wenn der Ventilstellungswert der darauffolgenden Periode wieder innerhalb der Abweichung liegt. Auch kann beispielsweise bei einer kontinuierlichen Zunahme der Abweichung über die Perioden eine zukünftige Entwicklung der Verschmutzung prognostiziert werden. So kann aus der Änderung der Ventilstellungswerte der wenigstens einen Messreihe ein zukünftiger Verlauf der Ventilstellungswerte für den Betrachtungszeitraum berechnet und daraus eine Vorhersage des Zeitpunktes einer Verstopfung des Wärmetauschers oder eine Vorhersage einer Restlaufzeit bis zu einer Verstopfung des Wärmetauschers abgeleitet werden.

Durch diese Früherkennung kann der Wärmetauscher rechtzeitig gereinigt oder ausgetauscht werden. Dadurch werden unnötige Wartungsarbeiten vermieden und Schäden durch zu spätes Reinigen verhindert. Zur Erhöhung der Kundenzufriedenheit kann die Reinigung außerhalb des Normalbetriebs erfolgen, ohne dass es zu einer tatsächlichen Verstopfung kommt. So kann das Wartungsteam gezielt und geplant dann den Wärmeaustauscher reinigen, wenn kundenseitig der Heiz- oder Kühlbetrieb unterbrochen werden darf.

Bevorzugt kann die Abweichung über den Aufzeichnungszeitraum angepasst werden, sodass die Auswertung an die jeweiligen Gegebenheiten des Regelsystems flexibel angepasst werden kann.

Ferner können bevorzugt mehrere Messreihen zu unterschiedlichen Betrachtungszeiträumen mit gleicher Periodizität ausgewertet werden. So kann ein Vergleich zwischen den Betrachtungszeiträumen Januar und Februar stattfinden. So kann beispielsweise, sollte eine Abweichung im Januar über dem gesetzten Grenzwert liegen, im Februar jedoch noch innerhalb des Grenzwerts eine unterschiedliche Entscheidung getroffen werden, als wenn nur der Januar berücksichtigt würde. Die Auswertung mehrerer Messreihen kann auch bei der Prognose Anwendung stattfinden.

Die Ventilstellungswerte werden aufgenommen und in einem Datenspeicher eines Prozessreglers gespeichert und in dem Prozessregler verarbeitet. Das Ergebnis der Verarbeitung wird über eine Schnittstelle an eine Leitzentrale übermittelt. Bei dieser Ausgestaltung des Verfahrens wird die in dem Prozessregler vorhandene Rechenleistung ausgenutzt, sodass keine zusätzliche Hardware erforderlich ist. Die Auswertung ist insbesondere in Form eines Softwareprogramms in den Prozessregler integriert.

Vorteilhafterweise ist das erfindungsgemäße Diagnoseverfahren dadurch gekennzeichnet, dass die Ventilstellungswerte an eine Leitzentrale übermittelt werden und dort verarbeitet werden. Die Leitzentrale kann so die Auswertungsergebnisse über die Diagnose in ihren Ablauf einbinden.

Wird die Abweichung überschritten kann eine Warnmeldung gegeben werden.

Die Warnmeldung kann als Anzeigesignal am Gerätedisplay generiert werden, oder die Warnmeldung wird als SMS und/oder als E-Mail an eine Servicezentrale abgesetzt, um dadurch den Kundendienst zu informieren, der so rechtzeitig und störungsfrei für den Kunden reagieren kann und so die Anlage in Betrieb halten kann.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: ein Schema für einen Prozessregelantrieb mit einem Prozessregler und einem Stellventil;
- Fig. 2: ein Schema für einen abgewandelten Prozessregelantrieb mit einem Prozessregler und einem Stellventil.

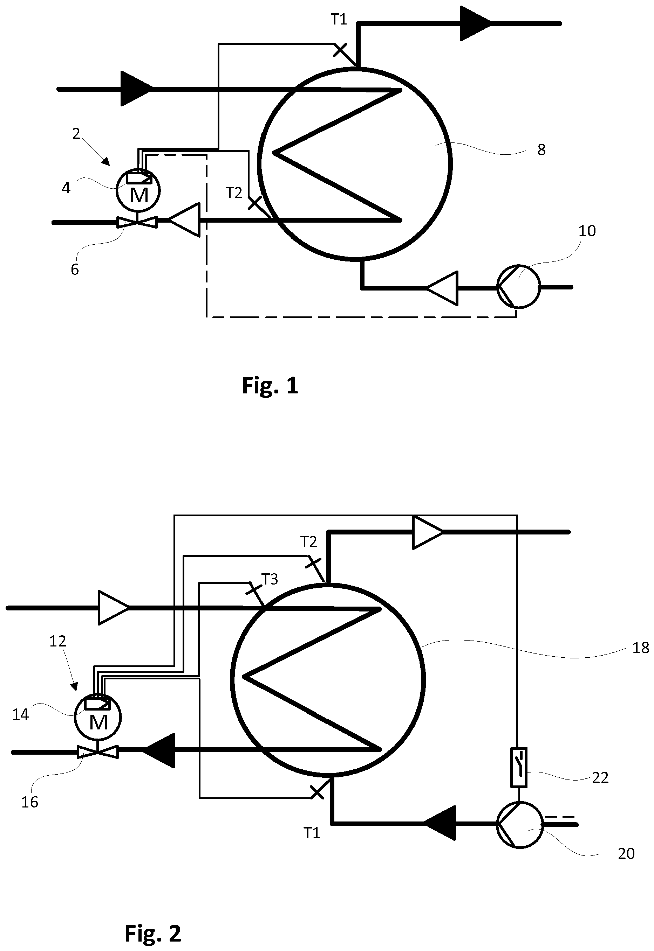

Die Fig. 1 zeigt ein Schema für eine Fernwärmeanwendung mit einem Prozessregler 4 und einem durch den Prozessregler 4 angesteuerten, regelbaren Stellventil 6. Das Stellventil 6 ist an einen Wärmetauscher 8 angeschlossen und erhält als Messgrößen die Vorlauftemperatur T1 eines Verbraucherkreises und die Rücklauftemperatur T2 eines Netzkreises. Dem Prozessregelantrieb 2 ist optional eine Pumpe 10 im Verbraucherkreis zugeschaltet, die eine weitere Steuerungsmöglichkeit bietet. Der Prozessregler 4 regelt das Stellventil 6 auf eine Sollwärmeübertragungsleistung. Der für die Sollwärmeübertragungsleistung erforderliche Massestrom im Netzkreis wird als Maß für den Verschmutzungsgrad des Wärmetauschers 8 ausgewertet. In dem Beispielschema von Fig. 1 dient der Prozessregelantrieb 2 in Kombination mit dem Stellventil 6 zur Heizungsregelung der Vorlauftemperatur des Verbraucherkreises.

Als Ventilstellungswerte werden die Hubwerte des Stellventils aufgezeichnet. Diese werden über die Hubwerte des Stellventils 6 erfasst, wie sie vom Prozessregler 4 als Soll-Werte ausgegeben werden. Als Ventilstellungswert kann durch eine Umrechnung des Hubwerts durch Berücksichtigung der Nennweite und des kvs-Wertes auch ein Volumenstrom abgebildet werden.

Die Hubwerte werden in 5-minütigen Abständen gemessen und alle 60 Min. zu einem Mittelwert zusammengefasst. Letztlich sollte je Woche zumindest ein Hubmittelwert gespeichert bleiben.

Die Fig. 2 zeigt ein Schema für eine Fernkälteanwendung mit einem Prozessregler 14 und einem regelbaren Stellventil 16. Das Stellventil 16 ist an einen Wärmetauscher 18 angeschlossen und erhält als Messgrößen die Rücklauftemperatur T3 des Verbraucherkreises, die Vorlauftemperatur T1 des Verbraucherkreises und die Vorlauftemperatur T4 des Netzkreises bei der Fernkälteanwendung. Der Prozessregler 12 ist mit einer Pumpe 20 im Verbraucherkreis verbunden, die eine weitere Steuerungsmöglichkeit bietet. An der Pumpe 20 ist ein Schalter 22 als potentialfreier Kontakt vorgesehen, wobei ein Binäreingang am dem Schalter 22 die Regelung einschaltet, wenn die Pumpe 20 eingeschaltet wird. Der Prozessregler 14 regelt das Stellventil 16 auf eine Sollwärmeübertragungsleistung. In dem Beispielschema von Fig. 2 dient der Prozessregelantrieb 12 in Kombination mit dem Stellventil 16 zur Fernkälteregelung.

### Bezugszeichenliste

- 2: Prozessregelantrieb
- 4: Prozessregler
- 6: Stellventil
- 8: Wärmetauscher
- 10: Pumpe
- 12: Prozessregelantrieb
- 14: Prozessregler
- 16: Stellventil
- 18: Wärmetauscher
- 20: Pumpe
- 22: Schalter

- T1: Vorlauftemperatur/Verbraucherkreis
- T2: Rücklauftemperatur/Netzkreis
- T3: Rücklauftemperatur/Verbraucherkreis
- T4: Vorlauftemperatur/Netzkreis

## Patentansprüche

1. Verfahren zur Diagnose des Verschmutzungsgrades eines Wärmetauschers (8, 18) zum Wärmeaustausch zwischen einem Netzkreis und einem Verbraucherkreis, bei dem der Massestrom des Strömungsmittels durch den Netzkreis des Wärmetauschers (8, 18) durch ein Stellventil (6, 16) eingestellt wird, welches von einem Prozessregler (4, 14) geregelt wird, **dadurch gekennzeichnet, dass** die von dem Prozessregler (4, 14) gelieferten Ventilstellungswerte für das Stellventil (6, 16) erfasst und gespeichert werden, wobei die Ventilstellungswerte für das Stellventil (6, 16) über einen Aufzeichnungszeitraum derart aufgezeichnet werden, dass in wenigstens einer Messreihe Ventilstellungswerte, die einem periodischen Betrachtungszeitraum zugeordnet sind, gespeichert werden, wobei der Betrachtungszeitraum gleiche Teile eines Jahres widerspiegelt, wobei durch Auswertung der Stellungswerte der wenigstens einen Messreihe über den Aufzeichnungszeitraum ein Verschmutzungsgrad des Wärmetauschers (8, 18) diagnostiziert wird, wenn die Abweichung eines gespeicherten Messwerts zu einem der Messreihe zugeordnetem Referenzwert größer als eine vordefinierte Abweichung vom Referenzwert ist.

2. Verfahren nach Anspruch 1, **dadurch gekennzeichnet, dass** aus der Änderung des zeitlichen Verlaufs der Ventilstellungswerte der wenigstens einen Messreihe ein zukünftiger Verlauf der Ventilstellungswerte für den Betrachtungszeitraum berechnet und daraus eine Vorhersage des Zeitpunktes einer Verstopfung des Wärmetauschers (8, 18) oder eine Vorhersage einer Restlaufzeit bis zu einer Verstopfung des Wärmetauschers (8, 18) abgeleitet wird.

3. Diagnoseverfahren nach Anspruch 1, **dadurch gekennzeichnet, dass** die Ventilstellungen über einen Betrachtungszeitraum gemittelt werden.

4. Diagnoseverfahren nach Anspruch 1 oder 2, **dadurch gekennzeichnet, dass** für die Vorhersage mehrere Messreihen zu unterschiedlichen Betrachtungszeiträumen mit gleicher Periodizität ausgewertet werden.

5. Diagnoseverfahren nach einem der vorangehenden Ansprüche, **dadurch gekennzeichnet, dass** die Ventilstellung dem Hubwert des Ventils entspricht.

6. Diagnoseverfahren nach einem der vorangehenden Ansprüche, **dadurch gekennzeichnet, dass** der Betrachtungszeitraum einem Kalendermonat entspricht.

7. Diagnoseverfahren nach Anspruch 6, **dadurch gekennzeichnet, dass** mehrere Messreihen, die je einem Kalendermonat oder einer Kalenderwoche zugeordnet sind, aufgenommen werden.

8. Diagnoseverfahren nach einem der vorangehenden Ansprüche, **dadurch gekennzeichnet, dass** die Regelung der Wärmeübertragungsleistung aufgrund der Vorlauftemperatur (T1) des Verbraucherkreises und der Rücklauftemperatur (T2) des Netzkreises des Wärmetauschers (8, 18) erfolgt.

9. Diagnoseverfahren nach einem der vorangehenden Ansprüche, **dadurch gekennzeichnet, dass** die Rücklauftemperatur (T3) in den Messperioden gemessen, gespeichert und in die Berechnung der Änderung des Verlaufs der Ventilstellungswerte einbezogen wird.

10. Diagnoseverfahren nach einem der vorhergehenden Ansprüche, **dadurch gekennzeichnet, dass** die Ventilstellungswerte des Stellventils (6, 16) in einem Datenspeicher des Prozessreglers (4, 14) gespeichert werden und in dem Prozessregler (4, 14) verarbeitet werden, und dass das Ergebnis der Verarbeitung über eine Schnittstelle an eine Leitzentrale übermittelt wird.

11. Diagnoseverfahren nach einem der vorhergehenden Ansprüche, **dadurch gekennzeichnet, dass** die Ventilstellungswerte des Stellventils (6, 16) über eine Schnittstelle an eine Leitzentrale übermittelt und dort verarbeitet werden.

12. Diagnoseverfahren nach einem der vorhergehenden Ansprüche, **dadurch gekennzeichnet, dass** eine Warnmeldung gegeben wird, wenn die Abweichung überschritten wird.

13. Diagnoseverfahren nach Anspruch 12, **dadurch gekennzeichnet, dass** die Warnmeldung als Anzeigesignal am Gerätedisplay generiert wird.

14. Diagnoseverfahren nach Anspruch 12, **dadurch gekennzeichnet, dass** die Warnmeldung als SMS und/oder als E-Mail an eine Servicezentrale abgesetzt wird/werden, um dadurch den Kundendienst zu informieren.

## Claims

1. Method for diagnosing the degree of contamination of a heat exchanger (8, 18) used to exchange heat between a network circuit and a consumer circuit, in which the mass flow of the fluid through the network circuit of the heat exchanger (8, 18) is set by a control valve (6, 16) that is controlled by a process controller (4, 14), **characterized in that** the position values of the control valve (6, 16) provided by the process controller (4, 14) are detected and stored, said position values for the control valve (6, 16) are recorded over a recording period in such a way that valve position values associated with a periodic observation period are stored in at least one measurement series, said observation period reflecting equal parts of a year, wherein a degree of contamination of the heat exchanger (8, 18) is diagnosed by evaluating the position values from said at least one measurement series over the recording period if the deviation of a stored measured value from a respective reference value assigned to the measurement series is higher than a predefined deviation from the reference value.

2. Diagnostic method according to claim 1, **characterized in that** a future course of the valve position values for the observation period is calculated from the change in the temporal course of the valve position values of said at least one measurement series, and such future course is used as a basis to predict the time when the heat exchanger (8, 18) will become clogged, or to predict the time remaining before the heat exchanger (8, 18) will become clogged.

3. Diagnostic method according to claim 1, **characterized in that** the valve positions are averaged over an observation period.

4. Diagnostic method according to one of claims 1 or 2, **characterized in that** a plurality of measurement series are evaluated at different observation periods with the same periodicity, for the purpose of making said prediction.

5. Diagnostic method according to any one of the preceding claims, **characterized in that** the valve position corresponds to the value of the valve lift.

6. Diagnostic method according to any one of the preceding claims, **characterized in that** the observation period is one calendar month.

7. Diagnostic method according to claim 6, **characterized in that** plural measurement series are recorded, with each measurement series being assigned to a calendar month or to a calendar week.

8. Diagnostic method according to any one of the preceding claims, **characterized in that** the heat transfer power is controlled on the basis of the flow temperature (T1) of the consumer circuit and of the return temperature (T2) of the network circuit of the heat exchanger (8, 18).

9. Diagnostic method according to any one of the preceding claims, **characterized in that** the return flow temperature (T3) is measured and stored in the measuring periods, and included in the calculation of the change in the course of the valve position values.

10. Diagnostic method according to any one of the preceding claims, **characterized in that** the position values of the control valve (6, 16) are stored in a data memory of the process controller (4, 14) and are processed in the process controller (4, 14), and **in that** the result of the processing is transmitted to a control center via an interface.

11. Diagnostic method according to any one of the preceding claims, **characterized in that** via an interface, the position values of the control valve (6, 16) are transmitted to a control center which then processes the values.

12. Diagnostic method according to any one of the preceding claims, **characterized in that** a warning message is issued when the deviation is exceeded.

13. Diagnostic method according to claim 12, **characterized in that** said warning message is generated in the form of an indication signal on the display of the device.

14. Diagnostic method according to claim 12, **characterized in that** said warning message is/are sent to a service center in the form of a text message and/or an e-mail in order to inform customer service.

## Revendications

1. Procédé pour le diagnostic du degré d'encrassement d'un échangeur de chaleur (8, 18) permettant l'échange de chaleur entre un circuit réseau et un circuit consommateur, selon lequel le débit massique du milieu d'écoulement à travers le circuit réseau de l'échangeur de chaleur (8, 18) est régulé par une vanne de régulation (6, 16), laquelle est réglée par un régulateur de processus (4, 14), **caractérisé en ce que** les valeurs de position de vanne fournies par le régulateur de processus (4, 14) pour la vanne de régulation (6, 16) sont acquises et mises en mémoire, dans lequel les valeurs de position de vanne pour la vanne de régulation (6, 16) sont enregistrées pendant une période d'enregistrement, de telle sorte que les valeurs de position de vanne associées à une période d'observation périodique sont mises en mémoire au cours d'au moins une série de mesures, dans lequel la période d'observation reflète les mêmes parties d'une année, dans lequel une évaluation des valeurs de position de l'au moins une série de mesures pendant la période d'enregistrement permet de diagnostiquer un degré d'encrassement de l'échangeur de chaleur (8, 18), lorsque l'écart entre une valeur de mesure mise en mémoire et une valeur de référence associée à la série de mesures est supérieur à un écart prédéfini par rapport à la valeur de référence.

2. Procédé selon la revendication 1, **caractérisé en ce qu'**une variation future des valeurs de position de vanne pendant la période d'observation est calculée à partir de la modification de la variation temporelle des valeurs de position de vanne de l'au moins une série de mesures et une prévision du moment d'une obstruction de l'échangeur de chaleur (8, 18) ou une prévision d'un temps restant jusqu'à une obstruction de l'échangeur de chaleur (8, 18) en est déduite.

3. Procédé de diagnostic selon la revendication 1, **caractérisé en ce que** la moyenne des positions de vanne est calculée pendant une période d'observation.

4. Procédé de diagnostic selon la revendication 1 ou 2, **caractérisé en ce que,** pour la prévision, plusieurs séries de mesures sont évaluées à différentes périodes d'observation d'une même périodicité.

5. Procédé de diagnostic selon l'une quelconque des revendications précédentes, **caractérisé en ce que** la position de vanne correspond à la valeur de levée de la vanne.

6. Procédé de diagnostic selon l'une quelconque des revendications précédentes, **caractérisé en ce que** la période d'observation correspond à un mois calendaire.

7. Procédé de diagnostic selon la revendication 6, **caractérisé en ce que** plusieurs séries de mesures associées chacune à un mois calendaire ou à une semaine calendaire sont relevées.

8. Procédé de diagnostic selon l'une quelconque des revendications précédentes, **caractérisé en ce que** la régulation de la puissance de transmission de chaleur s'effectue sur la base de la température aller (T1) du circuit consommateur et de la température de retour (T2) du circuit réseau de l'échangeur de chaleur (8, 18).

9. Procédé de diagnostic selon l'une quelconque des revendications précédentes, **caractérisé en ce que** la température de retour (T3) est mesurée au cours des périodes de mesure, mise en mémoire et intégrée dans le calcul de la modification de la variation des valeurs de position de vanne.

10. Procédé de diagnostic selon l'une quelconque des revendications précédentes, **caractérisé en ce que** les valeurs de position de vanne de la vanne de régulation (6, 16) sont mises en mémoire dans une mémoire de données du régulateur de processus (4, 14) et traitées dans le régulateur de processus (4, 14), et **en ce que** le résultat du traitement est transmis à un poste de commande par l'intermédiaire d'une interface.

11. Procédé de diagnostic selon l'une quelconque des revendications précédentes, **caractérisé en ce que** les valeurs de position de vanne de la vanne de régulation (6, 16) sont transmises à un poste de commande par l'intermédiaire d'une interface et y sont traitées.

12. Procédé de diagnostic selon l'une quelconque des revendications précédentes, **caractérisé en ce qu'un** message d'avertissement est envoyé lorsque l'écart est dépassé.

13. Procédé de diagnostic selon la revendication 12, **caractérisé en ce que** le message d'avertissement est généré sur l'écran de l'appareil sous la forme d'un signal indicateur.

14. Procédé de diagnostic selon la revendication 12, **caractérisé en ce que** le message d'avertissement est envoyé à une centrale de service sous la forme d'un SMS et/ou d'un courriel, afin d'informer de cette façon le service après-vente.
